# EUROPÄISCHE PATENTANMELDUNG

(11) **EP 4 742 472 A1**
(43) Veröffentlichungstag der Anmeldung: **13.05.2026**
(21) Anmeldenummer: 25212411.0
(22) Anmeldetag: 30.10.2025
(51) Int. Cl.: H02G 3/18

(54) **UNTERFLUREINBAUEINHEIT SOWIE UNTERFLURINSTALLATIONSBAUTEIL FÜR EINE SOLCHE UNTERFLUREINBAUEINHEIT**

(30) Priorität: 07.11.2024 DE 202024106374 U
(71) Anmelder: OBO Bettermann Hungary Kft, 2347 Bugyi (HU)
(72) Erfinder: Herzig, Markus, 51643 Gummersbach (DE)
(74) Vertreter: Haverkamp Patentanwälte PartG mbB

(57) **Zusammenfassung**

Beschrieben ist eine Unterflureinbaueinheit 1 zum Unterflureinbau von insbesondere elektrischen/elektronischen Installationen, umfassend ein Unterflurinstallationsbauteil 2 mit einer oberseitig offenen Montageöffnung 4 und mit einem Montagedeckel mit einer Durchgriffsöffnung sowie umfassend ein innerhalb der Montageöffnung 4 des Unterflurinstallationsbauteils 2 angeordnetes Einbauteil 3 mit einer die Durchgriffsöffnung des Montagedeckels durchgreifenden Rahmenstruktur 12, deren oberer Abschluss von dem oberen Abschluss des Unterflurinstallationsbauteils 2 abragt, wobei der Montagedeckel ein oberes Deckelteil 8 und wenigstens ein unteres Deckelteil 9 mit jeweils einer Durchgriffsöffnung 11, 13 umfasst, wobei die Durchgriffsöffnung 11 des einen Deckelteils 8 größer ist als diejenige des anderen Deckelteils 9 und wobei die Umrissgeometrie der kleineren Durchgriffsöffnung 13 an die Umrissgeometrie der Rahmenstruktur 12 des Einbauteils 3 angepasst und das diese Durchgriffsöffnung 13 aufweisende Deckelteil 9 in einer Stellung gegenüber dem oberen Deckelteil 8 von der Innenseite der die Montageöffnung 4 begrenzenden Teile des Unterflurinstallationsbauteils allseitig beabstandet ist, und dass ein Deckelteil 9 gegenüber dem anderen Deckelteil 8 in der Ebene der Erstreckung der Deckelteile 8, 9 zur Positionierung des Einbauteils 3 innerhalb der Montageöffnung 4 des Unterflurinstallationsbauteils 2 verstellbar ist.

Beschrieben ist ferner ein Unterflurinstallationsbauteil für eine solche Unterflureinbaueinheit.

## Beschreibung

Gegenstand der Erfindung ist eine Unterflureinbaueinheit zum Unterflureinbau von insbesondere elektrischen/elektronischen Installationen, umfassend ein Unterflurinstallationsbauteil mit einer oberseitig offenen Montageöffnung und mit einem Montagedeckel mit einer Durchgriffsöffnung sowie umfassend ein innerhalb der Montageöffnung des Unterflurinstallationsbauteils angeordnetes Einbauteil mit einer die Durchgriffsöffnung des Montagedeckels durchgreifenden Rahmenstruktur, deren oberer Abschluss von dem oberen Abschluss des Unterflurinstallationsbauteils abragt, und umfassend einen Montagedeckel mit einer Durchgriffsöffnung für den Durchgriff der Rahmenstruktur des Einbauteils zum oberseitigen Verblenden einen Freiraumes zwischen dem Unterflurinstallationsbauteil und der gegenüber dem Unterflurinstallationsbauteil abragenden Rahmenstruktur des Einbauteils.

Elektrische, elektronische oder andere Installationen werden vielfach unterflur verlegt. Die hierfür eingesetzten Unterflur-Leitungsführungssysteme umfassen Kanäle und Unterflurinstallationsbauteile, wie etwa Unterflurdosen. Unterflurdosen dienen zum Einbau von elektrischen und/oder elektronischen Geräten sowie in vielen Fällen auch zur Bereitstellung eines Kabelein- bzw. -auslasses. Derartige Unterflurinstallationen sind in den Bodenaufbau integriert, beispielsweise in einen Estrichboden. Der Montagehohlraum für die Installationen wird durch eine Unterflurdose bereitgestellt, mithin durch ein Unterflurinstallationsbauteil mit einer oberseitigen Durchgriffsöffnung, die auch als Montageöffnung oder als Einbauöffnung angesprochen werden kann. Ein derartiges Unterflurinstallationsbauteil ist in vielen Fällen aus einzelnen Rahmenelementen zusammengesetzt, die den Montagehohlraum einfassen. Der Oberboden des Bodenaufbaus, beispielsweise ein Fliesenbelag, übergreift bereichsweise den oberen Abschluss der Rahmenstruktur eines solchen Unterflurinstallationsbauteils. Um einen Zugang zu dem Montagehohlraum des Unterflurinstallationsbauteils bereitzustellen, befindet sich in der Durchgriffsöffnung des Unterflurinstallationsbauteils ein Einbauteil, welches beispielsweise als Einbaukassette oder Einbaurahmen mit oder ohne daran angeschlossenen Klappdeckel ausgebildet sein kann. Ein solches Einbauteil kann an der Rahmenstruktur des Unterflurinstallationsbauteils gehalten sein. Genauso gut ist es möglich, dass ein solches Einbauteil bodenseitig abgestützt ist, dann typischerweise mittels nivellierbaren Füßen, um den oberen Abschluss eines solchen Einbauteils an die Höhe der Oberseite des Oberbodens anpassen zu können. Ein solches Einbauteil verfügt über eine Rahmenstruktur, die durch die Durchgriffsöffnung des Montagedeckels hindurchgreift und von dem oberen Abschluss des Installationsbauteils abragt. Der obere Abschluss des Einbauteils befindet sich typischerweise in der Höhe des oberen Abschlusses des Oberbodens.

Vorbekannt ist eine solche Unterflureinbaueinheit aus DE 202 05 355 U1. Die Rahmenstruktur des Unterflurinstallationsbauteils dieser Unterflureinbaueinheit verfügt an ihrer die Montageöffnung einfassenden Seite über profilierte Schienen, in denen Rahmenstege abgestützt sind. Diese dienen zum Tragen eines Einsatzrahmens als Einsatzteil. Zum Verblenden des oberseitigen Zwischenraums zwischen der Rahmenstruktur des Unterflurinstallationsbauteils und der Rahmenstruktur des Einbaurahmens dient ein Montagedeckel. Dieser ist mit den Rahmenprofilteilen des Unterflurinstallationsbauteils verschraubt.

Wenn das Einbauteil als Einbaukassette ausgelegt ist, verfügt der Einbaurahmen über einen Boden. Dann dient die Rahmenstruktur des Einbaurahmens zur Aufnahme eines Oberbodenbelages, beispielsweise einer oder auch mehrerer Fliesen.

Wird eine derartige Unterflureinbaueinheit unter einen Oberboden mit Fliesenbelag eingesetzt, ist es wünschenswert, dass die Rahmenstruktur des Einbauteils in das Fugenbild des außenseitig zu der Rahmenstruktur anzuordnenden Fliesenbelages passt. Die Positionierung des Unterflurinstallationsbauteils erfolgt vor dem Bereitstellen des Unterbodens, beispielsweise dem Gießen eines Estrichs und insbesondere auch bevor der Oberboden verlegt wird. Entsprechend genau ist vor dem Einbau des Unterflurinstallationsbauteils in den Unterboden, beispielsweise dessen Verguss in einem Estrich, dieser dem vorgesehenen Fugenbild des Oberbodens zu positionieren. In vielen Fällen gelingt dies nicht, sodass dann durch das mit seiner Rahmenstruktur den Oberboden durchgreifende Einbauteil das Fugenbild gestört ist. Dieses wird mitunter als unschön oder wenig harmonisch empfunden. Überdies führt dieses zu Problemen bei einer norm- bzw. praxisgerechten Erstellung der erforderlichen umlaufenden dauerelastischen Fuge.

Ausgehend von diesem diskutierten Stand der Technik liegt der Erfindung daher die Aufgabe zu Grunde, eine Unterflureinbaueinheit sowie ein Unterflurinstallationsbauteil für eine solche Unterflureinbaueinheit vorzuschlagen, mit der die vorstehend zu dem diskutierten Stand der Technik angesprochenen Nachteile reduziert und bestenfalls gänzlich vermieden sind.

Gelöst wird die sich auf die Unterflureinbaueinheit beziehende Aufgabe erfindungsgemäß durch eine eingangs genannte, gattungsgemäße Unterflureinbaueinheit, bei der der Montagedeckel ein oberes Deckelteil und wenigstens ein unteres Deckelteil mit jeweils einer Durchgriffsöffnung umfasst, wobei die Durchgriffsöffnung des einen Deckelteils größer ist als diejenige des anderen Deckelteils und wobei die Umrissgeometrie der kleineren Durchgriffsöffnung an die Umrissgeometrie der Rahmenstruktur des Einbauteils angepasst und das diese Durchgriffsöffnung aufweisende Deckelteil in einer Stellung gegenüber dem anderen Deckelteil von der Innenseite der die Montageöffnung begrenzenden Teile des Unterflurinstallationsbauteils allseitig beabstandet ist, und dass ein Deckelteil gegenüber dem anderen Deckelteil in der Ebene der Erstreckung der Deckelteile zur Positionierung des Einbauteils innerhalb der Montageöffnung des Unterflurinstallationsbauteils verstellbar ist.

Das Unterflurinstallationsbauteil dieser Unterflureinbaueinheit verfügt über einen mehrteiligen Montagedeckel, wobei die Mehrteiligkeit durch ein oberes Deckelteil und wenigstens ein unteres Deckelteil bereitgestellt ist. In ihrer Gesamtheit bilden die Deckelteile den Montagedeckel, durch den oberseitig ein Freiraum zwischen den die Montageöffnung einfassenden Bestandteilen des Unterflurinstallationsbauteils und der Rahmenstruktur des Einbauteils verblendet ist. Die für die Bereitstellung des Montagedeckels verwendeten einzelnen Deckelteile weisen jeweils eine Durchgriffsöffnung für die Rahmenstruktur eines Einbauteils auf. Die zumindest zwei Deckelteile sind unterschiedlich ausgeführt. Bei dem einen Deckelteil ist die Durchgriffsöffnung größer als diejenige des anderen Deckelteils. Die Umrissgeometrie der Durchgriffsöffnung des Deckelteils mit der kleineren Durchgriffsöffnung ist an die Umrissgeometrie der Rahmenstruktur des Einbauteils angepasst, typischerweise dergestalt, dass die Rahmenstruktur eng an der die Durchgriffsöffnung bildenden Wandung dieses Deckelteils anliegt und nur ein sehr geringer Bewegungsspalt verbleibt. Das Deckelteil mit ihrer an die Umrissgeometrie der Rahmenstruktur angepassten Durchgriffsöffnung weist eine geringere flächige Erstreckung in der x-y-Ebene auf, als das andere Deckelteil mit seiner größeren Durchgriffsöffnung. Innerhalb der Montageöffnung des Unterflurinstallationsbauteils ist dieses Deckelteil in zumindest einer Stellung allseitig von den die Montageöffnung einfassenden Teilen der Rahmenstruktur des Unterflurinstallationsbauteils beabstandet. Dieses gestattet, dass das Deckelteil mit der kleineren Durchgriffsöffnung gegenüber dem anderen Deckelteil in der Ebene der Erstreckung der Deckelteile (x-y-Ebene) verstellbar ist. Diese Verstellbarkeit erlaubt eine Verstellung des an die Rahmenstruktur des Einbauteils angepassten Deckelteils mit der durchgreifenden Rahmenstruktur des Einbauteils innerhalb der Durchgriffsöffnung des anderen Deckelteils, und zwar in dem Maße, wie dieses durch die Größe des Deckelteils mit der kleineren Durchgriffsöffnung innerhalb der Montageöffnung bzw. durch die Bewegbarkeit der Rahmenstruktur des Einbauteils innerhalb der größeren Durchgriffsöffnung des anderen Deckelteils gestattet ist. Auf diese Weise kann eine Positionierung des Einbauteils mit seiner Rahmenstruktur innerhalb der Montageöffnung des Unterflurinstallationsbauteils in zumindest einer Richtung, vorzugsweise jedoch in zwei Richtungen und damit in der x-y-Ebene vorgenommen werden, und zwar vor allem auch dann, wenn das Unterflurinstallationsbauteil bereits in den Unterboden eingebaut ist. Somit kann die Position der Rahmenstruktur des Einbauteils insbesondere bei einem Fugen aufweisenden Bodenbelag, wie etwa einem Fliesenbelag als, in das Fugenbild der angearbeiteten Fliesen einpassend, positioniert werden. In einem Ausführungsbeispiel ist vorgesehen, dass die beiden Deckelteile gegeneinander zusammen mit der von dem einen Deckelteil eingefassten Rahmenstruktur des Einbauteils um die halbe Fliesenbreite der den Oberboden bildenden Fliesen verstellbar ist. In aller Regel wird ausgehend von einer zentrierten bzw. mittigen Stellung der beiden Deckelteile zueinander eine Einrichtbarkeit von ± 30 bis 35 mm als ausreichend angesehen. Es versteht sich, dass eine derartige Unterflureinbaueinheit bzw. das Unterflurinstallationsbauteil derselben auch mit anderen Verstellbeträgen ihrer Deckelteilen ausgelegt sein kann.

Typischerweise umfasst der Montagedeckel des Unterflurinstallationsbauteils einer solchen Unterflureinbaueinheit zwei Deckelteile. Gleichwohl ist es auch möglich, dass neben dem oberen Deckelteil auch zwei oder mehrere weitere untere Deckelteile vorgesehen sein können. Diese können, wenn gewünscht, gegeneinander in der x-y-Ebene verstellbar sein.

Die Verstellbarkeit der Deckelteile zueinander erfolgt, wenn eine Positionierung in unterschiedliche Richtungen möglich sein soll, in zwei Richtungen, in denen das die Rahmenstruktur des Einbauteils einfassende Deckelteil jeweils linear bzw. translatorisch verstellbar ist. In einem bevorzugten Ausführungsbeispiel ist zudem vorgesehen, dass das die Rahmenstruktur des Einbauteils einfassende Deckelteil gegenüber dem anderen Deckelteil um einige Winkelgrade verschwenkbar ist. Dann kann auch eine Fehlausrichtung des Unterflurinstallationsbauteils gegenüber der Verlaufsrichtung eines Fugen aufweisenden Oberbodenbelages ausgeglichen bzw. kompensiert werden.

Typischerweise ist das Deckelteil mit der größeren Durchgriffsöffnung das obere Deckelteil. Dieses ist gemäß einem bevorzugten Ausführungsbeispiel lösbar an das Unterflurinstallationsbauteil angeschlossen. Eingesetzt werden für diesen Anschluss typischerweise Schraubverbinder, die gemäß einem Ausführungsbeispiel die äußeren Ecken des oberen Deckelteils durchgreifen und in Eckverbindern der Rahmenstruktur des Unterflurinstallationsbauteils festgesetzt sind.

Gemäß einer ersten Ausgestaltung einer Realisierung der Verstellbarkeit des die Rahmenstruktur des Einbauteils einfassenden Deckelteils gegenüber dem anderen Deckelteil ist vorgesehen, dass ersteres Deckelteil auf Auflageschienen abgestützt und in Längserstreckung derselben verschiebbar ist. Diese Auflageschienen verfügen typischerweise über eine oberseitig offene Führungsnut, in die das Deckelteil mit typischerweise mehreren in die Führungsnut jeder Führungsschiene eingreifenden Führungsgliedern eingreift. Diese können als Ausprägungen oder Ausstellungen oder auch durch von dem Deckelteil abragenden Nieten, Schrauben oder dergleichen realisiert sein. Wenn eine Verstellbarkeit in Querrichtung zu der durch die Auflageschienen bereits ermöglichten Verstellrichtung des darauf befindlichen Deckelteils gewünscht ist, sind diese Auflageschienen mit ihren Enden in Führungsnuten der Rahmenstruktur des Unterflurinstallationsbauteils eingreifend konzipiert. Dann können diese das untere Deckelteil tragenden Auflageschienen auch quer zu ihrer eigenen Längserstreckung verstellt werden. Typischerweise ist der Eingriff der Enden in die Führungsnuten der Rahmenstruktur des Unterflurinstallationsbauteils so ausgeführt, dass diese um zumindest einige Winkelgrade gegenüber den Führungsnuten des Unterflurinstallationsbauteils verschwenkt werden können. Auf diese Weise ist auch eine Schwenkbarkeit des die Rahmenstruktur des Einbauteils einfassenden Deckelteils gegenüber dem anderen Deckelteil möglich. Ist das untere Deckelteil mittels Führungsglieder in bzw. an den Auflageschienen geführt, dann dienen diese zugleich als Mitnehmer bei einer Querverschiebbarkeit dieser Auflageschienen gegenüber den Führungsnuten der Rahmenstruktur durch Bewegen des unteren Deckelteils. Grundsätzlich ist auch eine Ausgestaltung der Auflage des unteren Deckelteils auf den Auflageschienen möglich, ohne dass diese über Führungsglieder miteinander in Eingriff gestellt sind. Beim Einrichten der Positionierung der Einbaukassette wird eine der beiden Auflageschienen bei entsprechender Verschieberichtung verstellt. Die andere wird dann manuell nachgeführt.

Gemäß einer weiteren Ausgestaltung zur Realisierung einer Verstellbarkeit der zumindest zwei Deckelteile gegeneinander ist vorgesehen, dass die beiden Deckelteile aneinander angeschlossen sind und zwar dergestalt, dass die gewünschte Verstellbarkeit des einen Deckelteils gegenüber dem anderen ermöglicht ist. Erreicht werden kann dieses beispielsweise dadurch, dass beide Deckelteile jeweils miteinander kooperierende Durchbrechungen als Führungskulissen, beispielsweise Langlöcher aufweisen, wobei die Erstreckung der Führungskulissen in den beiden Deckelteilen unterschiedlich, beispielsweise um 90° zueinander versetzt ist. Auch bei einer solchen Ausgestaltung ist das obere Deckelteil vorzugsweise lösbar mit Schraubverbindern an die Rahmenstruktur des Unterflurinstallationsbauteils angeschlossen.

Sind mehrere untere Deckelteile vorgesehen, ist auch eine Kombination der beiden vorbeschriebenen Möglichkeiten einer Verstellbarkeit derselben realisierbar.

Nachfolgend ist die Erfindung anhand von Ausführungsbeispielen unter Bezugnahme auf die beigefügten Figuren beschrieben. Es zeigen:

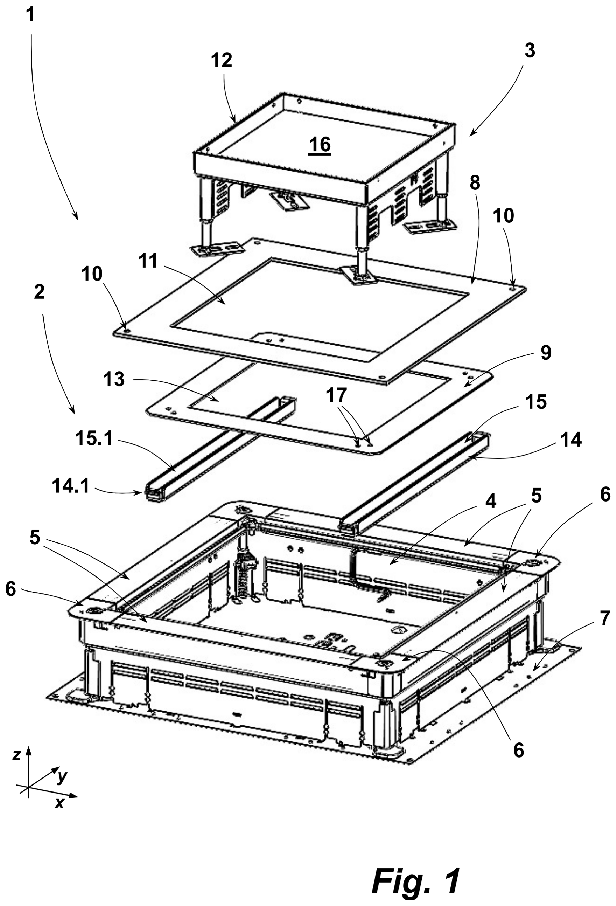

- **Fig. 1:**: Eine perspektivische Darstellung nach Art einer Explosionsdarstellung einer erfindungsgemäßen Unterflureinbaueinheit mit einem Unterflurinstallationsbauteil und einer Einbaukassette als Einbauteil,
- **Fig. 2:**: das Unterflurinstallationsbauteil der Figur 1 in einem ersten teilzusammengesetzten Zustand entsprechend einem ersten Montageschritt zum Zusammensetzen des Unterflurinstallationsbauteils,
- **Fig. 3:**: das Unterflurinstallationsbauteil der Figur 1 in einem weiteren teilzusammengesetzten Zustand gemäß einem zweiten Montageschritt zum Zusammensetzen des Unterflurinstallationsbauteils,
- **Fig. 4:**: das Unterflurinstallationsbauteil der Figur 1 in noch einem weiteren teilzusammengesetzten Zustand entsprechend einem weiteren Schritt zum Zusammensetzen des Unterflurinstallationsbauteils,
- **Fig. 5:**: Ein Deckelteil des Unterflurinstallationsbauteils der Unterflureinbaueinheit der vorstehend genannten Figuren in einer perspektivischen Ansicht auf dessen Unterseite,
- **Fig. 6:**: Eine vergrößerte Darstellung eines Endabschnittes des Deckelteils der Figur 5,
- **Fig. 7:**: Eine Führungsschiene in einer perspektivischen Ansicht, auf der das Deckelteil der Figuren 5 und 6 abgestützt ist,
- **Fig. 8:**: Eine Querschnittdarstellung durch die Unterflureinbaueinheit der Figur 1 mit Schnittrichtung in Richtung des Verlaufs der in Figur 7 gezeigten Führungsschienen,
- **Fig. 9:**: Eine vergrößerte Ausschnittsdarstellung des in Figur 8 gestrichelt kenntlich gemachten Bereiches des Querschnittes der Unterflureinbaueinheit der Figur 8,
- **Fig. 10:**: Die in einen Bodenaufbau eingebaute Unterflureinbaueinheit, eingepasst in das Fugenbild eines Fliesenbelages,
- **Fig. 11:**: Eine weitere Einbausituation der Unterflureinbaueinheit in einen Bodenaufbau mit einem Fliesenbeleg als Oberboden,
- **Fig. 12:**: Die in einen Bodenaufbau eingebaute Unterflureinbaueinheit, eingepasst in das Fugenbild eines weiteren Fliesenbelages,
- **Fig. 13:**: Eine perspektivische Darstellung einer weiteren erfindungsgemäßen Unterflureinbaueinheit mit einem Unterflurinstallationsbauteil, dargestellt ohne Einbauteil, und
- **Fig. 14:**: Eine Draufsicht auf das bezüglich seiner Einzelteile montierte Unterflurinstallationsbauteil der Figur 13.

Eine Unterflureinbaueinheit 1 umfasst ein Unterflurinstallationsbauteil 2 und eine Einbaukassette 3 als Einbauteil. Das Unterflurinstallationsbauteil 2 verfügt über eine oberseitig offenen Montageöffnung 4. Die Montageöffnung 4 ist durch vier Rahmenprofilabschnitte 5 eingefasst, die zur Ausbildung der Ecken miteinander durch Eckverbinder 6 miteinander verbunden sind. Die Rahmenprofilabschnitte 5 bilden den oberen Einbaurahmen. Seitenwandbleche ragen von diesen Rahmenprofilabschnitten 5 nach unten zum seitlichen Verschließen des Unterflurinstallationsbauteils 2, das somit nach Art einer Dose ausgeführt ist. Die durch die Rahmenprofilabschnitte 5 und die diese verbindenden Eckverbinder 6 gebildete Rahmenstruktur ist auf einem Bodenblech 7 angeordnet. Der obere Abschluss der Rahmenprofilabschnitte 5 mit den Eckverbindern 6 ist eben ausgeführt und auf die Höhe des Abschlusses eines Unterbodens, etwa der Oberkante eines Estrichs, nivellierbar. Zu diesem Zweck sind die Eckverbinder 6 mit auf dem Bodenblech 7 abgestützten nivellierbaren Füßen ausgestattet.

Teil des Unterflurinstallationsbauteils 2 sind ferner zwei Deckelteile 8, 9. Das Deckelteil 8 ist das obere Deckelteil. Das Deckelteil 9 ist gegenüber dem Deckelteil 8 das untere Deckelteil. Das Deckelteil 8 verfügt in den außenseitigen Eckbereichen jeweils über eine Befestigungsbohrung 10. Diese sind für den Durchgriff jeweils eines Schraubbefestigers ausgelegt, die mit ihrem Gewindeschaft in jeweils einem Eckverbinder 6 verankert sind. Damit ist das obere Deckelteil 8 lösbar an die Rahmenstruktur des Unterflurinstallationsbauteils 2 angeschlossen. Das obere Deckelteil 8 verfügt über eine Durchgriffsöffnung 11, durch die die Einbaukassette 3 mit ihrer oberen Rahmenstruktur 12 hindurchgreift. Die Durchgriffsöffnung 11 ist bei dem dargestellten Ausführungsbeispiel mittig bezüglich der flächigen Erstreckung des Deckelteils 8 angeordnet. Es versteht sich, dass auch andere Anordnungen ohne Weiteres möglich sind. Die Größe und somit die lichte Weite der Durchgriffsöffnung 11 ist größer als für den Durchgriff der Rahmenstruktur 12 der Einbaukassette 3 erforderlich. Innerhalb des Übermaßes der Durchgriffsöffnung 11 gegenüber der Rahmenstruktur 12 ist die Einbaukassette 3 mit ihrer in die Durchgriffsöffnung 11 hineinreichenden Rahmenstruktur 12 gegenüber dem oberen Deckelteil 8 verstellbar.

Das untere Deckelteil 9 verfügt ebenfalls über eine Durchgriffsöffnung 13. Diese ist hinsichtlich ihrer Geometrie und maßlich an die Umrissgeometrie und Bemaßung der Rahmenstruktur 12 der Einbaukassette 3 angepasst. Die äußere Umrissgeometrie und Bemaßung des unteren Deckelteils 9 ist kleiner als diejenige des oberen Deckelteils 8 und dient dem Zweck, dass das untere Deckelteil 9 innerhalb der Montageöffnung 4 gegenüber dem oberen Deckelteil 8 und somit auch gegenüber der durch die Rahmenprofilabschnitte 5 und die Eckverbinder 6 gebildeten Rahmenstruktur verstellbar ist. Zumindest in einer mittigen Stellung ist das untere Deckelteil 9 allseitig von den die Montageöffnung 4 einfassenden Rahmenprofilabschnitten 5 beabstandet. Bei diesem Unterflurinstallationsbauteil 2 wird somit der Abstand zwischen der zur Montageöffnung 4 weisenden Seite der Rahmenprofilabschnitte 5 und der Rahmenstruktur 12 der Einbaukassette 3 durch die diesbezüglich zusammenwirkenden Deckelteile 8, 9 verblendet.

Das untere Deckelteil 9 ist auf zwei Auflageschienen 14, 14.1 abgestützt. Die Auflageschienen 14, 14.1 verfügen jeweils über eine nach oben und somit zum unteren Deckelteil 9 hin offene Führungsnut 15, 15.1. Die in Längserstreckung weisenden Enden der Führungsschienen 14, 14.1 sind in Führungsschienen der einander gegenüberliegenden Rahmenprofilabschnitte 5 der Rahmenstruktur des Unterflurinstallationsbauteils 2 eingesetzt. Damit sind die Auflageschienen 14, 14.1 quer zu ihrer Längserstreckung gegenüber den Führungsschienen der einander gegenüberliegenden Rahmenprofilabschnitte 5 verschiebbar. Da das untere Deckelteil 9 eine kürzere Erstreckung in Richtung der Längserstreckung der Auflageschienen 14, 14.1 aufweist, ist dieses gegenüber diesen Auflageschienen 14, 14.1in Richtung ihrer Längsrichtung verstellbar.

Die Einbaukassette 3 als beispielhaftes Einbauteil zum Ausbilden einer Unterflureinbaueinheit verfügt über Nivellierfüße, über die der obere Abschluss der Rahmenstruktur 12 in Bezug auf seinen Abstand zur Oberseite des Bodenbleches 7 einrichtbar ist. Die Nivellierung des oberen Abschlusses der Einbaukassette 3 wird auf das Höhenniveau des Oberbodens eingerichtet. Bei dem dargestellten Ausführungsbeispiel verfügt die Rahmenstruktur 12 über einen Boden 16, wodurch eine Bodenbelagsaufnahme gebildet ist. Eingesetzt wird in diese typischerweise der für den Oberboden vorgesehene Belag, beispielsweise eine Fliese.

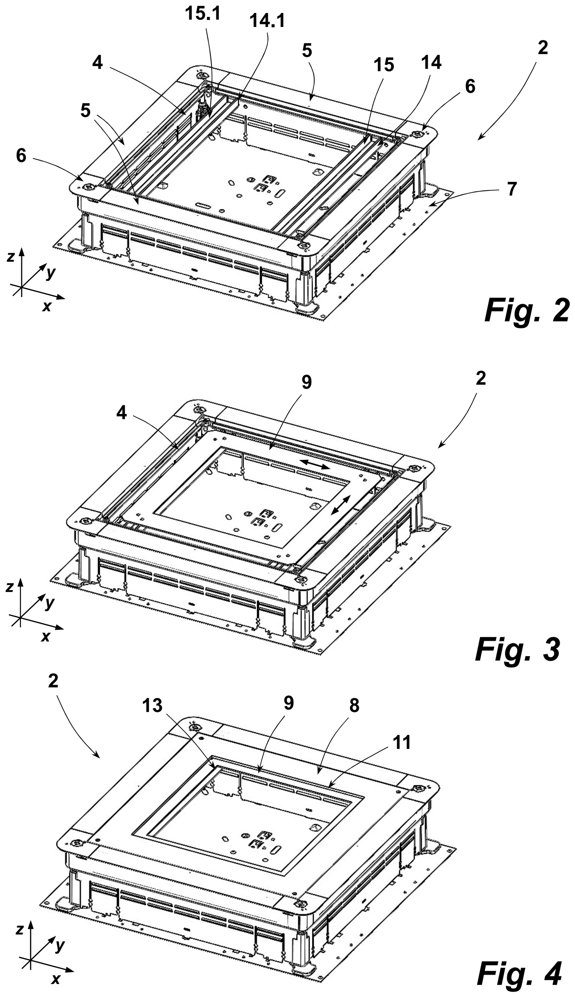

Figur 2 zeigt die in Führungsnuten der Rahmenprofilabschnitte 5 mit ihren Endabschnitten eingeschwenkten Auflageschienen 14, 14.1. Das untere Deckelteil 9 verfügt über unterseitige Ausstellungen 17, die in die Führungsnuten 15, 15.1 eingreifen und anhand derer das untere Deckelteil, der Längserstreckung der Führungsschienen 14, 14.1 folgend, verstellbar ist, wie in Figur 3 durch einen Doppelpfeil angedeutet. Infolge der Verschiebbarkeit der Auflageschienen 14, 14.1 gegenüber den Rahmenprofilabschnitten 5 ist das untere Deckelteil 9 ebenfalls in Querrichtung zur Längserstreckung der Auflageschienen 14, 14.1 innerhalb der Montageöffnung 4 verstellbar. Auch diese Richtung einer Verstellbarkeit des unteren Deckelteils 9 ist in Figur 3 durch einen Doppelpfeil angedeutet.

Der Eingriff der Enden der Auflageschienen 14, 14.1 in die Führungsnuten der einander gegenüberliegenden Rahmenprofilabschnitte 5 der Rahmenstruktur des Unterflurinstallationsbauteils 2 ist bei dem dargestellten Ausführungsbeispiel eingerichtet, damit die Auflageschienen 14, 14.1 gegenüber der Erstreckung der Rahmenprofilabschnitte 5 in der x-y-Ebene verschwenkbar sind. Dieses ermöglicht eine Verstellung des unteren Deckelteils 9 innerhalb der Montageöffnung 4 auch in Form einer Drehung, soweit dieses durch die Bemaßung des unteren Deckelteils 9 innerhalb der Montageöffnung 4 möglich ist.

Figur 4 zeigt das Unterflurinstallationsbauteil 2 mit seinen beiden Deckelteilen 8, 9. Erkennbar ist in dieser Darstellung die größere Bemaßung der Durchgriffsöffnung 11 des oberen Deckelteils 8 gegenüber derjenigen des unteren Deckelteils 9. Ist die Einbaukassette 3 in die Durchgriffsöffnung 13 des unteren Deckelteils 9 eingesetzt, kann diese zusammen mit dem unteren Deckelteil 9 innerhalb der Öffnungsweite der Durchgriffsöffnung 11 des oberen Deckelteils 8 verstellt werden, und zwar in den zu Figur 3 angegebenen Richtungen. In Figur 4 befindet sich das untere Deckelteil 9 gegenüber dem oberen Deckelteil 8 in einer zentrischen Anordnung.

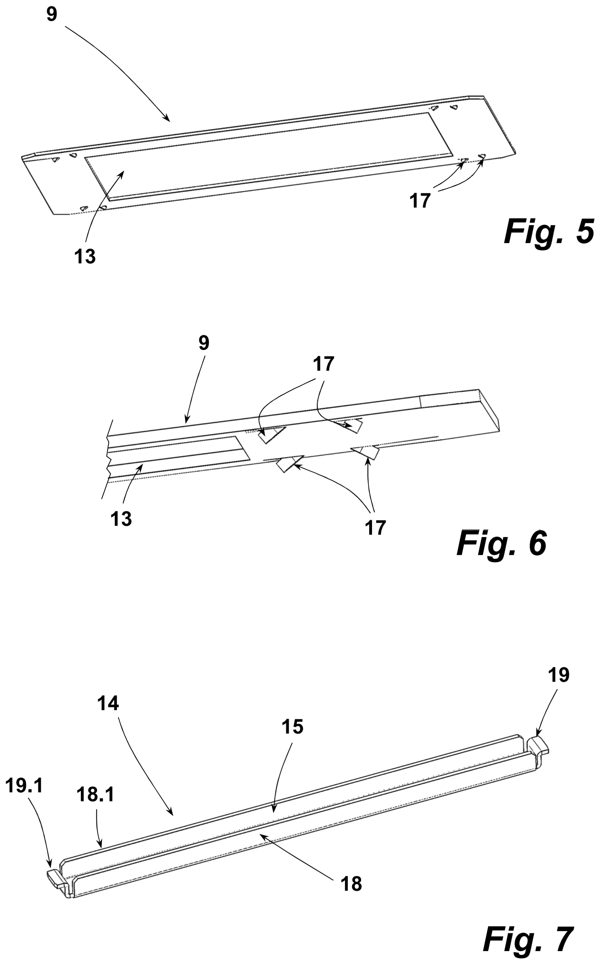

Das untere Deckelteil 9 ist in Figur 5 in einer perspektivischen Darstellung mit Blickrichtung auf dessen Unterseite gezeigt. Unterseitig ragen in den Endabschnitten die bereits vorstehend angesprochenen Ausstellungen 17 ab, wobei jeweils ein Ausstellungspaar in jedem Endbereich in die oberseitig offene Führungsnut 15 bzw. 15.1 der jeweiligen Auflageschienen 14 bzw. 14.1 eingreift. Figur 6 zeigt eine vergrößerte Darstellung aus einem Endabschnitt des unteren Deckelteils 9, in der die Ausführung der Ausstellungen 17 erkennbar sind. Die Ausstellungen 17 eines Ausstellungspaares sind mit einem gewissen Versatz in y-Richtung zueinander angeordnet, wobei der Abstand der voneinander wegweisenden Seiten der lichten Weite der Führungsnut 15 bzw. 15.1 einer Auflageschienen 14, 14.1 abzüglich eines erforderlichen Bewegungsspiels entspricht.

Figur 7 zeigt die Auflageschienen 14 in einer perspektivischen Alleindarstellung. Die Auflageschiene 14.1 ist identisch, sodass die nachstehenden Ausführungen ebenfalls für die Auflageschiene 14.1 gelten. Die Führungsschiene 14 ist bei dem dargestellten Ausführungsbeispiel als Stanzbiegeteil aus einem Fe-Metallblech hergestellt. Die Führungsnut 15 wird durch zwei Seitenwände 18, 18.1 bereitgestellt. Ein die Seitenwände 18, 18.1 verbindender Boden ist zur Ausbildung der Endabschnitte länger als die Seitenwände 18, 18.1. Diese Endabschnitte sind zur Ausbildung eines Stützabschnittes 19, 19.1 verkröpft. Die Stützabschnitte 19, 19.1 greifen in jeweils eine Führungsnut eines als Seitenteil dienenden Rahmenprofilabschnittes 5 der Rahmenstruktur des Unterflurinstallationsbauteils 2 ein.

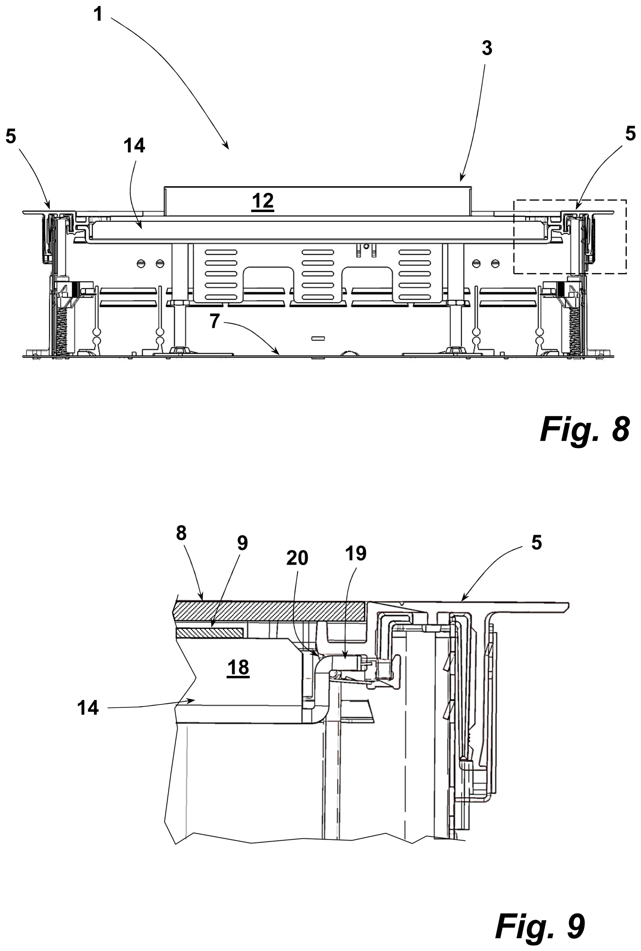

Der Eingriff des Endabschnittes 19 der Auflageschiene 14 in eine Führungsnut eines Rahmenprofilabschnittes 5 ist in der vergrößerten Darstellung der Querschnittsdarstellung der Figur 8 erkennbar. Teil des Rahmenprofilabschnittes 5 ist eine in Richtung zur Montageöffnung 4 hin offene Führungsnut 20. Erkennbar ist aus dieser Darstellung, dass der Stützabschnitt 19 nicht bis zu seinem stirnseitigen Ende in die Führungsnut 20 eingreift. Dieses erlaubt die bereits vorbeschriebene Verschwenkbarkeit der Auflageschiene 14 gegenüber der Führungsnut 20. In dieser vergrößerten Darstellung ist ebenfalls der zu der Führungsnut 20 weisende Endabschnitt des unteren Deckelteils 9 erkennbar. Das obere Deckelteil 8 sitzt auf einem nach oben weisenden Schenkel der des Rahmenprofilabschnittes 5 und verblendet den Freiraum zwischen dem oberen Abschluss der durch die Rahmenprofilabschnitte 5 und den die Eckverbinder 6 gebildeten Rahmenstruktur und dem unteren Deckelteil 9.

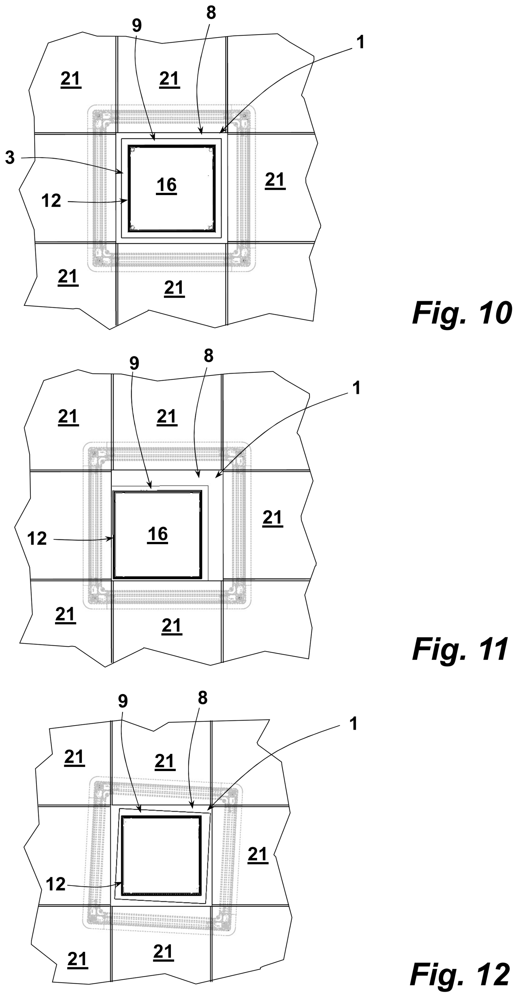

Figuren 10 bis 12 zeigen die in einen Boden eingebaute Unterflureinbaueinheit 1 mit einer jeweils unterschiedlichen Positionierung ihrer Einbaukassette 3 innerhalb der Durchgriffsöffnung 11 des oberen Deckelteils 8. Bei dem Bodenbelag der gezeigten Beispiele handelt es sich um einen Fugen aufweisenden Bodenbelag, hier: einen Fliesenbelag. Die Fliesen sind mit dem Bezugszeichen 21 kenntlich gemacht. Bei der Bodeneinbausituation der Figur 10 befindet sich die Einbaukassette 3 mit ihrer Rahmenstruktur 12 mittig innerhalb der Durchgriffsöffnung 11 des oberen Deckelteils 8. Der zwischen den angrenzenden Fliesen 21 und der Rahmenstruktur 12 der Einbaukassette 3 verbleibende Spalt fügt sich in das Fugenbild des Bodenbelages ein, auch wenn dieser etwas breiter ist als die Fugen. Es versteht sich, dass die Rahmenstruktur 12 der Einbaukassette 3 auch ein Innenmaß aufweisen kann, dass darin eine Fliese 21 eingesetzt werden kann. Dann verläuft der obere Abschluss der Rahmenstruktur 12 exakt im Fugenbild der an die Rahmenstruktur angearbeiteten Fliesen.

In der Einbausituation der Figur 11 befindet sich die Einbaukassette 3 mit ihrer Rahmenstruktur versetzt gegenüber dem oberen Deckelteil 8, bedingt dadurch, dass das Unterflurinstallationsbauteil 2 in Bezug auf das erst später erstellte Fugenbild des Fliesenbelages versetzt zu der Anordnung der Figur 10 ist.

Figur 12 zeigt beispielhaft, dass bei einer nicht korrekten Ausrichtung des Unterflurinstallationsbauteils 2 gegenüber dem Fugenbild des Fliesenbelages dennoch die Einbaukassette 3 mit ihrer Rahmenstruktur 12 in Richtung des Fugenverlaufes gegenüber dem oberen Deckelteil 8 eingerichtet werden kann, und zwar durch die Möglichkeit einer entsprechenden Drehung des unteren Deckelteils 9 mit der dieses durchgreifenden Rahmenstruktur 12 gegenüber dem oberen Deckelteil 8.

Die Einbausituationen, dargestellt in den Figuren 10 - 12, lassen deutlich werden, dass eine die Rahmenstruktur 12 umgebende Dehnungsfuge norm- und praxisgerecht erstellt werden kann.

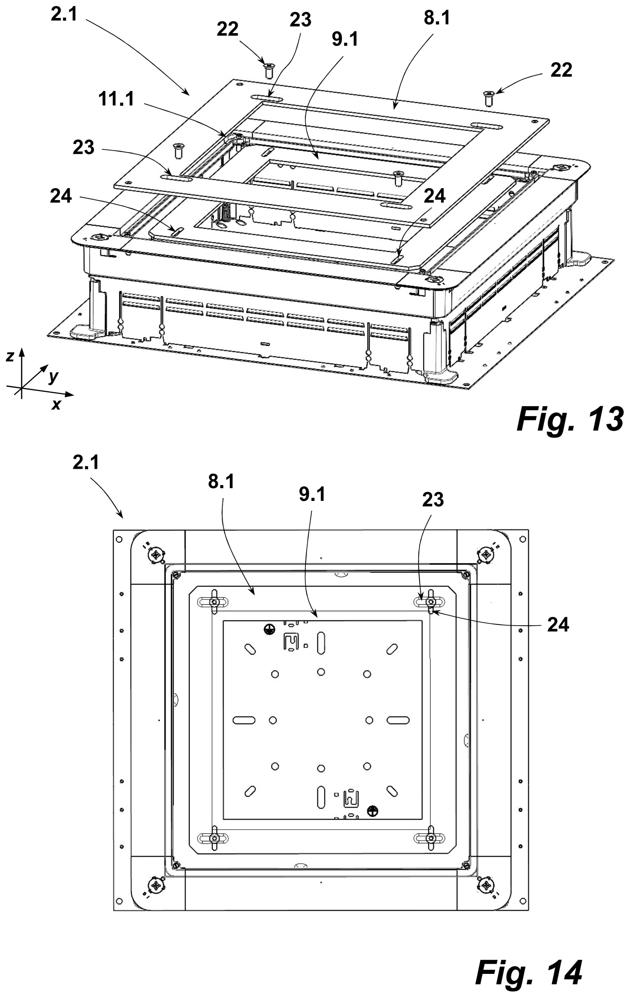

Figur 13 zeigt ein weiteres Unterflurinstallationsbauteil 2.1 für eine Unterflureinbaueinheit. Dieses ist bezüglich seiner Funktionalität genauso aufgebaut wie das Unterflurinstallationsbauteil 2 der vorstehenden Figuren. Daher sind gleiche Teile mit demselben Bezugszeichen, ergänzt um den Suffix ".1" kenntlich gemacht. Das Unterflurinstallationsbauteil 2.1 unterscheidet sich von dem Vorbeschriebenen dadurch, dass das untere Deckelteil 9.1 an das obere Deckelteil 8.1 angeschlossen und gegenüber diesem in denselben Richtungen verstellbar ist, wie das untere Deckelteil 9 gegenüber dem oberen Deckelteil 8 des Unterflurinstallationsbauteils 2. Die beiden Deckelteile 8.1, 9.1 sind mit Verbindern 22 miteinander verbunden. Bei den Verbindern 22 kann es sich um Schraubverbinder oder auch um Nieten handeln. Die Verbindung der beiden Deckelteile 8.1, 9.1 miteinander erfolgt ohne, dass die beiden Deckelteile 8.1, 9.1 gegeneinander verspannt sind, damit das Deckelteil 9.1 gegenüber dem Deckelteil 8.1 verstellbar bleibt. Werden als Verbinder 22 Schraubverbinder eingesetzt, können nach der Installation des Einbauteils und erfolgter Positionierung die beiden Deckelteile 8.1, 9.1 auch miteinander verspannt werden. Für die Verstellbarkeit des Deckelteils 9.1 gegenüber dem oberen Deckelteil 8.1 sind in beide Deckelteile 8.1, 9.1 kooperierende Langlöcher als Führungskulissen 23, 24 eingebracht. In dem Deckelteil 8.1 befinden sich diese Führungskulissen 23 in den Eckbereichen seiner Durchgriffsöffnung 11.1 und erstrecken sich in y-Richtung. Das Deckelteil 9.1 verfügt ebenfalls über Langlöcher als Führungskulissen 24. Diese laufen in Querrichtung zur Ausrichtung der Führungskulissen 23 des oberen Deckelteils 8.1 und damit in x-Richtung. Hinsichtlich ihrer Positionierung überlappen die Führungskulissen 23, 24 miteinander, wie aus der Draufsicht der Figur 14 erkennbar. Jeder Verbinder 22 durchgreift ein Führungskulissenpaar 23, 24 sodass das Deckelteil 9.1 gegenüber dem Deckelteil 8.1 im Rahmen der durch die Führungskulissen 23, 24 zugelassenen Verstellbarkeit entsprechend geführt verstellbar ist.

Ebenso wie bei dem Ausführungsbeispiel der Unterflureinbaueinheit 1 kann als Einbauteil in die Montageöffnung beispielsweise eine Einbaukassette oder auch ein Einbaurahmen als Einbauteil eingesetzt werden.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Unterflureinbaueinheit
- 2, 2.1: Unterflurinstallationsbauteil
- 3: Einbaukassette
- 4: Montageöffnung
- 5: Rahmenprofilabschnitt
- 6: Eckverbinder
- 7: Bodenblech
- 8, 8.1: Oberes Deckelteil
- 9, 9.1: Unteres Deckelteil
- 10: Befestigungsbohrung
- 11, 11.1: Durchgriffsöffnung
- 12: Rahmenstruktur
- 13: Durchgriffsöffnung
- 14, 14.1: Auflageschiene
- 15, 15.1: Führungsnut
- 16: Boden
- 17: Ausstellung
- 18, 18.1: Seitenwand
- 19, 19.1: Stützabschnitt
- 20: Führungsnut
- 21: Fliese
- 22: Verbinder
- 23: Führungskulisse
- 24: Führungskulisse

## Patentansprüche

1. Unterflureinbaueinheit zum Unterflureinbau von insbesondere elektrischen/elektronischen Installationen, umfassend ein Unterflurinstallationsbauteil (2, 2.1) mit einer oberseitig offenen Montageöffnung (4) und mit einem Montagedeckel mit einer Durchgriffsöffnung sowie umfassend ein innerhalb der Montageöffnung (4) des Unterflurinstallationsbauteils (2, 2.1) angeordnetes Einbauteil (3) mit einer die Durchgriffsöffnung des Montagedeckels durchgreifenden Rahmenstruktur (12), deren oberer Abschluss von dem oberen Abschluss des Unterflurinstallationsbauteils (2, 2.1) abragt, **dadurch gekennzeichnet, dass** der Montagedeckel ein oberes Deckelteil (8, 8.1) und wenigstens ein unteres Deckelteil (9, 9.1) mit jeweils einer Durchgriffsöffnung (11, 13; 11.1) umfasst, wobei die Durchgriffsöffnung (11, 11.1) des einen Deckelteils (8, 8.1) größer ist als diejenige des anderen Deckelteils (9, 9.1) und wobei die Umrissgeometrie der kleineren Durchgriffsöffnung (13) an die Umrissgeometrie der Rahmenstruktur (12) des Einbauteils (3) angepasst und das diese Durchgriffsöffnung (13) aufweisende Deckelteil (9, 9.1) in einer Stellung gegenüber dem oberen Deckelteil (8, 8.1) von der Innenseite der die Montageöffnung (4) begrenzenden Teile des Unterflurinstallationsbauteils allseitig beabstandet ist, und dass ein Deckelteil (9, 9.1) gegenüber dem anderen Deckelteil (8, 8.1) in der Ebene der Erstreckung der Deckelteile (8, 9; 8.1, 9.1) zur Positionierung des Einbauteils (3) innerhalb der Montageöffnung (4) des Unterflurinstallationsbauteils (2, 2.1) verstellbar ist.

2. Unterflureinbaueinheit nach Anspruch 1, **dadurch gekennzeichnet, dass** das Deckelteil (8, 8.1) mit der größeren Durchgriffsöffnung (11, 11.1) das obere Deckelteil ist.

3. Unterflureinbaueinheit nach Anspruch 2, **dadurch gekennzeichnet, dass** das obere Deckelteil (8, 8.1) lösbar, insbesondere mittels Schraubverbindern an das Unterflurinstallationsbauteil (2, 2.1) angeschlossen ist.

4. Unterflureinbaueinheit nach einem der Ansprüche 1 bis 3, **dadurch gekennzeichnet, dass** das unterste Deckelteil (9, 9.1) zumindest entlang einer Bewegungsbahn gegenüber dem Unterflurinstallationsbauteil (2, 2.1) verstellbar gelagert ist.

5. Unterflureinbaueinheit nach Anspruch 4, **dadurch gekennzeichnet, dass** die zumindest eine Bewegungsbahn linear ausgelegt ist.

6. Unterflureinbaueinheit nach Anspruch 4 oder 5, **dadurch gekennzeichnet, dass** zum Verschieben des untersten Deckelteils (9, 9.1) Auflageschienen (14, 14.1) mit einer Führungsnut (15, 15.1) vorgesehen sind, in die das unterste Deckelteil (9, 9.1) mit jeweils zumindest einem Führungsglied eingreift und auf diese Weise an den Auflageschienen (14, 14.1) geführt ist.

7. Unterflureinbaueinheit nach Anspruch 6, **dadurch gekennzeichnet, dass** die Führungsnuten (15, 15.1) nach oben hin offen sind und das unterste Deckelteil (9, 9.1) nach unten ausgestellte Ausstellungen (17) als Führungsglieder aufweist.

8. Unterflureinbaueinheit nach Anspruch 6 oder 7, **dadurch gekennzeichnet, dass** die Auflageschienen (14, 14.1), an denen das unterste Deckelteil (9, 9.1) zum Zwecke seiner Verstellung geführt ist, erste Führungsschienen sind, die mit ihren Enden in Führungsnuten (20) des Unterflurinstallationsbauteils (2, 2.1) eingreifen und darin in Querrichtung zu ihrer eigenen Längserstreckung verstellbar sind.

9. Unterflureinbaueinheit nach Anspruch 8, **dadurch gekennzeichnet, dass** der Eingriff der Enden der ersten Auflageschienen (14, 14.1) in die Führungsnuten (20) des Unterflurinstallationsbauteils (2, 2.1) eingerichtet ist, damit die ersten Auflageschienen (14, 14.1) in den Führungsnuten (20) translatorisch verstellbar sowie gegenüber diesen um zumindest einige Winkelgrade in der x-y-Ebene verschwenkbar sind.

10. Unterflureinbaueinheit nach Anspruch 4 oder 5, **dadurch gekennzeichnet, dass** zumindest eines der beiden Deckelteile (8.1, 9.1) mehrere Führungskulissen (23, 24) aufweist und die beiden Deckelteile (8.1, 9.1) mittels jeweils eine solche Durchbrechung durchgreifende Verbindern (22) miteinander verbunden sind.

11. Unterflureinbaueinheit nach Anspruch 10, **dadurch gekennzeichnet, dass** beide Deckelteile (8.1, 9.1) miteinander kooperierende Führungskulissen (23, 24) aufweisen.

12. Unterflureinbaueinheit nach Anspruch 11, **dadurch gekennzeichnet, dass** die Führungskulissen (23, 24) der beiden Deckelteile (8.1, 9.1) eine unterschiedliche Ausrichtung aufweisen.

13. Unterflureinbaueinheit nach Anspruch 12, **dadurch gekennzeichnet, dass** die Führungskulissen (23, 24) der beiden Deckelteile (8.1, 9.1) als Langlöcher ausführt sind, wobei diejenigen des einen Deckelteils (8.1) eine Ausrichtung haben, die gegenüber der Ausrichtung der Führungskulissen (24) des anderen Deckelteils (9.1) um 90° versetzt ist.

14. Unterflurinstallationsbauteil für eine Unterflureinbaueinheit, welches Unterflurinstallationsbauteil (2, 2.1) eine oberseitig offene Montageöffnung (4) sowie einen Montagedeckel mit einer Durchgriffsöffnung für den Durchgriff der Rahmenstruktur (12) eines in dem Unterflurinstallationsbauteil (2, 2.1) anzuordnenden Einbauteils (3) aufweist, **dadurch gekennzeichnet, dass** der Montagedeckel ein oberes Deckelteil (8, 8.1) und wenigstens ein unteres Deckelteil (9, 9.1) mit jeweils einer Durchgriffsöffnung (11, 13; 11.1) umfasst, wobei die Durchgriffsöffnung (11, 11.1) des einen Deckelteils (8, 8.1) größer ist als diejenige des anderen Deckelteils (9, 9.1) und wobei die Umrissgeometrie der kleineren Durchgriffsöffnung (13) an die Umrissgeometrie der Rahmenstruktur (12) eines in dem Unterflurinstallationsbauteil anzuordnenden Einbauteils (3) angepasst und das diese Durchgriffsöffnung (13) aufweisende Deckelteil (9, 9.1) in einer Stellung gegenüber dem anderen Deckelteil (8, 8.1) von der Innenseite der die Montageöffnung (4) begrenzenden Teile des Unterflurinstallationsbauteils allseitig beabstandet ist, und dass ein Deckelteil (9, 9.1) gegenüber dem anderen Deckelteil (8, 8.1) in der Ebene der Erstreckung der Deckelteile (8, 9; 8.1, 9.1) zur Positionierung des Einbauteils (3) innerhalb der Montageöffnung (4) des Unterflurinstallationsbauteils (2, 2.1) verstellbar ist.

15. Unterflurinstallationsbauteil nach Anspruch 14, **dadurch gekennzeichnet, dass** das Unterflurinstallationsbauteil (2, 2.1) eines oder mehrere Merkmale der Ansprüche 2 bis 13 aufweist.
